# EUROPÄISCHE PATENTSCHRIFT

(11) **EP 1 146 317 B1**
(45) Veröffentlichungstag und Bekanntmachung des Hinweises auf die Patenterteilung: **23.07.2003**
(21) Anmeldenummer: 00108217.1
(22) Anmeldetag: 14.04.2000
(51) Int. Cl.: G01C 23/00, G05D 1/08

(54) **Lastenstabilisierungssystem für Hubschrauber**
Helicopter load stabilisation system
Hélicoptère avec système de stabilisation d'une charge

(43) Veröffentlichungstag der Anmeldung: 17.10.2001
(73) Patentinhaber: Deutsches Zentrum für Luft- und Raumfahrt e.V, 53127 Bonn (DE)
(72) Erfinder: Bouwer, Gerhard, 38154 Königslutter (DE); Hamers, Mario, 38114 Braunschweig (DE)
(74) Vertreter: Patentanwälte Rehberg + Hüppe

(56) Entgegenhaltungen:
- US-A- 3 833 189
- US-A- 3 904 156
- US-A- 5 788 186

## Beschreibung

Die Erfindung bezieht sich auf einen Hubschrauber nach dem Oberbegriff des Anspruchs 1 und/oder des Anspruchs 4.

Die Anzeigeeinrichtungen für den Nickwinkel Theta bzw. den Rollwinkel Phi des Hubschraubers sind ein sogenannter künstlicher Horizont.

Wenn Hubschrauber zum Transport von Lasten eingesetzt werden, werden diese typischerweise über ein Seil an die Anhängeeinrichtung des Hubschraubers angehängt. Dabei besteht die Gefahr, daß diese Lasten je nach Aufhängung und aerodynamischen Eigenschaften mehr oder weniger stark pendeln. Das Pendeln erfolgt dabei sowohl in Richtung der Längsmittelebene des Hubschraubers, in der der Nickwinkel Theta erfaßt wird, als auch senkrecht dazu, d. h. in Richtung einer Querebene des Hubschraubers, in der der Lagekreisel den Rollwinkel Phi erfaßt. Das Pendeln der an den Hubschrauber angehängten Last beginnt durch Manöver des Hubschraubers wie Beschleunigen, Verzögern und Kurvenflug oder durch Windböen. Je nach der Masse der Last überträgt sich die Pendelbewegung auf den Hubschrauber. Der Pilot des Hubschraubers spürt die Eigendynamik der Last als zusätzliche Beschleunigungen und Lagestörungen. Wenn der Pilot instinktiv versucht, das Pendeln der Last durch Beschleunigungen oder Verzögerungen des Hubschraubers abzubauen, besteht die erhebliche Gefahr, daß hierdurch das Pendeln tatsächlich noch verstärkt wird. Es kann sogar passieren, daß das gekoppelte dynamische System aus dem Hubschrauber und der Last in der Folge für den Piloten außer Kontrolle gerät, und der Pilot letztlich die Last abwerfen muß, um sich und den Hubschrauber zu retten. Anfang 1999 hat sich ein Fall ereignet, in dem ein Sea-King SAR-Hubschrauber als Last von einem CH-53 Transporthubschrauber über der Nordsee abgeworfen werden mußte, weil das dynamische System aus dem Transporthubschrauber und seiner Last außer Kontrolle geriet. Je leichter die Last ist, desto schneller wird das Pendel grundsätzlich angefacht. Insbesondere dann, wenn der Pilot keine Informationen über den Ort der Last relativ zum Hubschrauber hat, kann er durch falsche Reaktionen die Pendelbewegung anregen. Das Pendeln einer leichten Last kann zur Katastrophe führen, wenn die Last in den Rotorkreis gerät.

Eine Analyse der Problematik pendelnder Lasten ergibt zwei Hauptprobleme. Der Pilot sieht die Last in der Regel nicht, sondern spürt nur wie Kraftrückkopplungen der pendelnden Last auf den Hubschrauber. Und die jeweilige Steuerstrategie zum Abbauen des Pendelns ist dem Piloten unklar.

Ein Hubschrauber nach dem Oberbegriffs des Anspruchs 1 und des Anspruchs 4 ist aus der US-A-3,833,189 bekannt. Hier werden der mit der normierten zeitlichen Ableitung des Winkels Theta_{absolut} und einer weiteren gefilterten Version der Ableitung additiv überlagerte Nickwinkel Theta sowie der mit der normierten zeitlichen Ableitung des Winkels Phi_{absolut} und einer weiteren gefilterten Version dieser Ableitung additiv überlagerte Rollwinkel Phi des Hubschraubers einem Autopiloten des Hubschraubers zugeführt, um Pendelbewegungen der Last automatisiert zu unterdrücken. Dies soll aufgrund der überlagerten Eingangssignale für den Autopiloten mit Algorithmen möglich sein, die bei üblichen Autopiloten für Hubschrauber verwendung finden.

Der Erfindung liegt daher die Aufgabe zugrunde, einen Hubschrauber nach dem Oberbegriffdes Anspruchs 1 und/oder des Anspruchs 4 aufzuzeigen, der es dem Piloten selbst ermöglicht, ein von außen angeregtes Pendeln einer angehängten Last schnell abzubauen und Manöver so zu fliegen, daß ein Pendeln der angehängten Last erst gar nicht angeregt wird.

Erfindungsgemäß wird diese Aufgabe durch die Merkmale des Anspruchs 1 und/oder des Anspruchs 4 gelöst.

Vorteilhafte Ausführungsformen des neuen Hubschraubers sind in den abhängigen Ansprüchen 2 und 3 sowie 5 bis 10 beschrieben.

Die Meßeinrichtungen dienen zur Erfassung des Winkels, unter der die Pendelachse der jeweilige Last aktuell zur Erdsenkrechten verläuft. Die Pendelachse der Last ist die Richtung unter der die jeweilige Last aktuell auf den Hubschrauber einwirkt, d. h. bei Aufhängung der Last über ein Seil die Richtung, in der das Seil verläuft, da ein Seil nur in seiner Haupterstreckungsrichtung Kräfte zwischen der Last und dem Hubschrauber übertragen kann. Bei dem erfindungsgemäßen Hubschrauber wird aber nicht der Winkel Theta_{absolut} zwischen der Erdsenkrechten und der Pendelachse der Last direkt zur Anzeige gebracht. Vielmehr wird eine zeitliche Ableitung dieses Winkels gebildet. Daher können die Meßeinrichtungen auch direkt eine solche zeitliche Ableitung bereitstellen, ohne den Winkel Theta_{absolut} selbst zu ermitteln. Bei der Anzeige wird dann die zeitliche Ableitung des Winkels Theta_{absolut} additiv dem Nickwinkel Theta des Hubschraubers überlagert, und das Überlagerungsergebnis wird auf dem künstlichen Horizont angezeigt. Das heißt, der künstliche Horizont zeigt, wenn die an den Hubschrauber angehängte Last nicht pendelt, nur den Nickwinkel Theta und den Rollwinkel Phi des Hubschraubers an. Sobald die Last zu pendeln beginnt, wächst der Anteil der zeitlichen Ableitung der Winkel Theta_{absolut} und Phi_{absolut} über null an. Da sich die Richtung der zeitlichen Ableitung der Winkel Theta_{absolut} und Phi_{absolut} ändert, "sieht" der Pilot durch das Pendeln der Anzeige für den Nickwinkel Theta und den Rollwinkel Phi das Pendeln der an den Hubschrauber angehängten Last. Wenn der Pilot dieses Pendeln der Anzeige unterdrückt, unterdrückt er ein Pendeln der Last und kann ohne Gefahren Manöver fliegen. Als besonderer Vorteil ist dabei anzusehen, daß der Pilot mit prinzipiell denselben Maßnahmen das Pendeln der Anzeige und damit der angehängten Last unterdrücken kann, wie er sie bei seinem konkreten Hubschraubermodell auch sonst intuitiv zur Underdrückung von schwankenden Nick- und Rollwinkeln einsetzt. Dies macht ein Aufrüsten vorhandener Hubschrauber zu erfindungsgemäßen Hubschraubern sehr interessant.

Die Meßeinrichtungen zur Erfassung der Winkel Theta_{absolut} und Phi_{absolut} können einen einzigen oder zwei getrennte Winkelmesser an der Aufhängeeinrichtung umfassen, um in der Längsmittelebene des Hubschraubers einen Winkel Thetaᵣₑₗₐₜᵢᵥ und in einer Querebene des Hubschraubers einen Winkel Phiᵣₑₗₐₜᵢᵥ zwischen der Hochachse des Hubschraubers und der Pendelachse der jeweilige Last oder direkt eine zeitliche Ableitung dieser Winkel zu erfassen. Die Winkel Theta_{absolut} und Phi_{absolut} setzen sich additiv aus den Winkeln Theta und Thetaᵣₑₗₐₜᵢᵥ bzw. Phi und Phiᵣₑₗₐₜᵢᵥ zusammen, von denen der Nickwinkel Theta und der Rollwinkel Phi bereits durch den Lagekreisel erfaßt werden, während die Winkel Thetaᵣₑₗₐₜᵢᵥ und Phiᵣₑₗₐₜᵢᵥ relativ einfach an der Anhängeeinrichtung relativ zur Hochachse des Hubschraubers bestimmt werden können.

Insbesondere, wenn der Hubschrauber sowieso einen Drehratenkreisel umfaßt, der in der Längsmittelebene des Hubschraubers eine zeitliche Ableitung des Nickwinkels Theta und in einer Querebene des Hubschraubers eine zeitliche Ableitung des Rollwinkels Phi erfaßt, stehen unmittelbar zeitliche Ableitungen der Winkel Theta und Phi als Summanden für die zeitlichen Ableitungen von Theta_{absolut} und Phi_{absolut} zur Verfügung.

Wie bereits angedeutet, sind die geeigneten Anzeigeeinrichtungen sowohl für den Nickwinkel Theta mit der additiven Überlagerung durch die zeitliche Ableitung des Winkels Theta_{absolut} als auch des Rollwinkels Phi überlagert mit der zeitlichen Ableitung des Winkels Phi_{absolut} ein für den Nickwinkel Theta und den Rollwinkel Phi auch üblicherweise verwendeter künstlicher Horizont.

Die zeitlichen Ableitungen der Winkel Theta_{absolut} bzw. Phi_{absolut} müssen für die additive Überlagerung mit dem Nickwinkel Theta bzw. dem Rollwinkel Phi normiert werden, da die Einheiten beider Summanden der jeweiligen Addition nicht übereinstimmen. Hierzu können die zeitlichen Ableitungen mit einem Faktor multipliziert werden, dessen Wert 0,1 bis 10 Sekunden beträgt. In der Erprobung der Erfindung hat sich ein Wert von etwa 1 Sekunde als sehr gut geeignet erwiesen, da er relativ zu der üblichen Anzeige des Nickwinkels Theta und des Rollwinkels Phi in Radian ausreichend große aber nicht zu große Anteile der zeitlichen Ableitungen an den gemeinsamen Anzeigewerten ergibt.

Die Anzeigeeinrichtungen bei dem neuen Hubschrauber können zusätzlich ein Warnsignal ausgeben, wenn der gemeinsame Anzeigewert von Theta und der zeitlichen Ableitung von Theta_{absolut} einen oberen oder unteren Schwellwert überschreitet, weil dies auf stark schwingende Lasten hindeutet. Das Warnsignal kann aber auch dann ausgegeben werden, wenn eine zeitliche Ableitung des gemeinsamen Anzeigewerts von Theta und der zeitlichen Ableitung von Thetaᵣₑₗₐₜᵢᵥ einen oberen oder unteren Schwellwert überschreitet. In diesem Fall hängt die Warnung von einer besonders starken Änderungstendenz des Anzeigewerts ab.

Ebenso, wie auf den gemeinsamen Anzeigewert von Theta und der zeitlichen Ableitung von Thetaᵣₑₗₐₜᵢᵥ bezogen, können die Anzeigeeinrichtungen auch ein Warnsignal bezogen auf den gemeinsamen Anzeigewert von Phi und der zeitlichen Ableitung von Phiᵣₑₗₐₜᵢᵥ ausgeben. Das Warnsignal kann ein akustisches und/oder ein optisches Warnsignal sein, um den Piloten des Hubschraubers auf die kritische Situation aufmerksam zu machen.

Darüberhinaus ist es möglich, daß die Anzeigewerte der Anzeigeeinrichtungen auch als Eingangssignale eines Autopiloten für den Hubschrauber verwendet wird bzw. werden. Der Autopilot kann dazu vorgesehen sein, die kritischen Situationen bei pendelnder Last automatisch zu bereinigen.

Die Erfindung wird im folgenden anhand eines AusführungsbeiSpiels näher erläutert und beschrieben. Dabei zeigt
- Figur 1: das Prinzipschaubild eines fliegenden Hubschraubers mit angehängter Last in der Seitenansicht,
- Figur 2: den Hubschrauber gemäß Figur 1 in einer Ansicht von hinten,
- Figur 3: einen künstlichen Horizont des Hubschraubers gemäß den Figuren 1 und 2,
- Figur 4: den Zeitablauf verschiedener Anzeigewerte auf dem künstlichen Horizont gemäß Figur 3 in einer ersten Flugsituation und
- Figur 5: verschiedene Anzeigewerte auf dem künstlichen Horizont gemäß Figur 3 in einer zweiten Flugsituation.

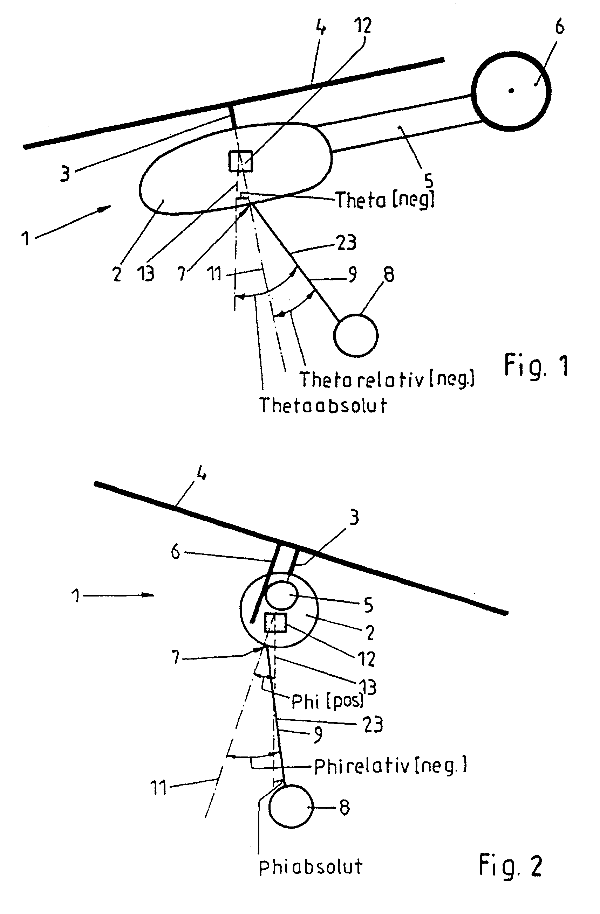

Der in Figur 1 skizzierte Hubschrauber 1 weist eine Hauptstruktur 2 auf, die unter anderem die Kabine des Hubschraubers 1 umfaßt und an der ein um eine Rotordrehachse 3 umlaufender Hauptrotor 4 drehantreibbar gelagert ist. Weiterhin ist an der Hauptstruktur 2 ein Heckausleger 5 gelagert, an dessen hinterem Ende ein Heckrotor 6 um eine horizontale Achse umläuft. An der Unterseite der Hauptstruktur 2 ist eine in ihren Einzelheiten nicht dargestellte Anhängeeinrichtung 7 vorgesehen, über die eine Last 8 mittels eines Seils 9 angehängt ist. Die Rotordrehachse 3 fällt in der vorliegenden Prinzipskizze der Einfachheit halber mit der Hochachse 11 des Hubschraubers 1 zusammen. Gegenüber der Hochachse 11 stellt ein Lagekreisel 12 des Hubschraubers 1 einen Nickwinkel Theta zur Erdsenkrechten 13 fest, der hier einen negativen Wert hat. Weiterhin ist die Anhängeeinrichtung 7 mit einem Winkelmesser versehen, der einen Winkel Thetaᵣₑₗₐₜᵢᵥ zwischen der Hochachse 11 und dem Seil 9, über das die Last 8 angehängt ist, d. h. zwischen der Hochachse 11 und der Pendelachse 23 der Last 8, erfaßt, der hier ebenfalls negativ ist. Die Summe der Winkel Theta und Thetaᵣₑₗₐₜᵢᵥ ergibt einen Winkel Theta_{absolut} der Last 8, der hier aufgrund seiner negativen Summanden natürlich auch negativ ist.

Aus Figur 2 geht hervor, daß der Lagekreisel 12 auch einen hier positiven Rollwinkel Phi zwischen der Hochachse 11 und der Erdsenkrechten 13 erfaßt, während der Winkelmesser an der Anhängeeinrichtung 7 auch einen hier negativen Winkel Phiᵣₑₗₐₜᵢᵥ zwischen der Hochachse 11 und der Pendelachse 23 der Last 8 erfaßt. Die Summe der Winkel Phi und Phiᵣₑₗₐₜᵢᵥ ergibt einen Winkel Phi_{absolut} der Last 8, der hier negativ ist.

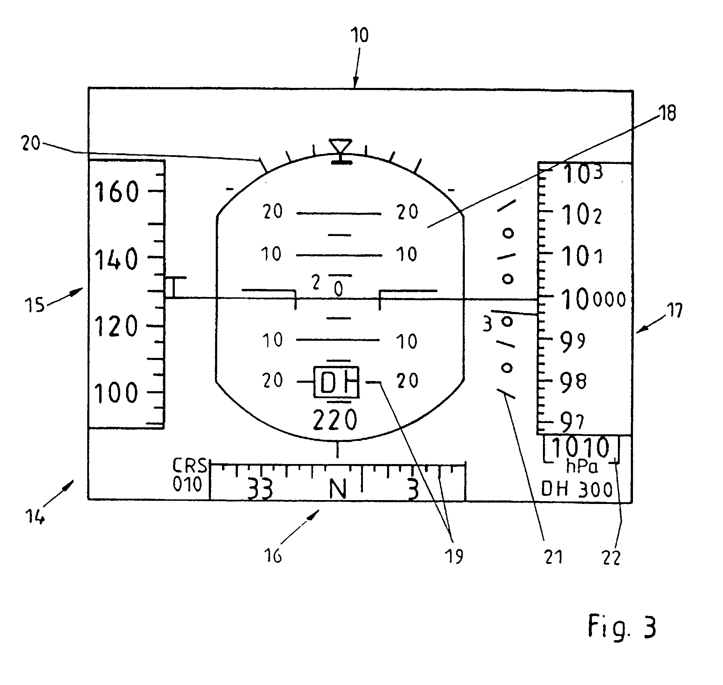

Der in Figur 3 dargestellte künstliche Horizont 14 des Hubschraubers 1 bildet Anzeigeeinrichtungen 10 für Theta und Phi aus und weist im Randbereich weiterhin eine Anzeige 15 für die Fluggeschwindigkeit, eine Anzeige 16 für die Flugrichtung (Himmelsrichtung) und eine Anzeige 17 für die barometrische Flughöhe (basierend auf dem in einer weiteren Anzeige 22 angegebenen atmosphärischen Bezugsdruck) auf. Eine weitere Anzeige 21 links neben der Anzeige 17 ist eine Navigationshilfe. Zentral ist die Anzeige 18 für die von dem Lagekreisel 12 kommenden Werte des Nickwinkels Theta und des Rollwinkels Phi vorgesehen. Dabei ist die Skala 19 für den Nickwinkel Theta wiederum zentral innerhalb der Anzeigeeinrichtung 18 angeordnet, während sich die Skala 20 für den Rollwinkel Phi im oberen Bereich der Anzeige 18 befindet. Bei dem erfindungsgemäßen Hubschrauber 1 wird auf der Anzeige 18 des künstlichen Horizonts 14 nicht nur der jeweilige Nickwinkel Theta bzw. Rollwinkel Phi selbst angezeigt. Vielmehr wird der Nickwinkel Theta überlagert mit einer zeitlichen Ableitung des Winkels Theta_{absolut} und der Rollwinkel Phi überlagert mit einer zeitlichen Ableitung des Winkels Phi_{absolut} angezeigt, wobei die zeitlichen Ableitungen durch einen Faktor mit einem Wert in der Größenordnung 1 Sekunde normiert werden. Hierdurch erhält der Pilot des Hubschraubers Informationen über ein etwaiges Pendel der Last 8 relativ zu dem Hubschrauber 1. Wenn die Last nicht pendelt, zeigt die Anzeige 18 nur den jeweiligen Nickwinkel Theta bzw. Rollwinkel Phi an. Sobald ein Pendel der Last 8 einsetzt, schwankt diese Anzeige, wobei die Stärke der Schwankung von der Stärke des Pendelns der Last abhängt.

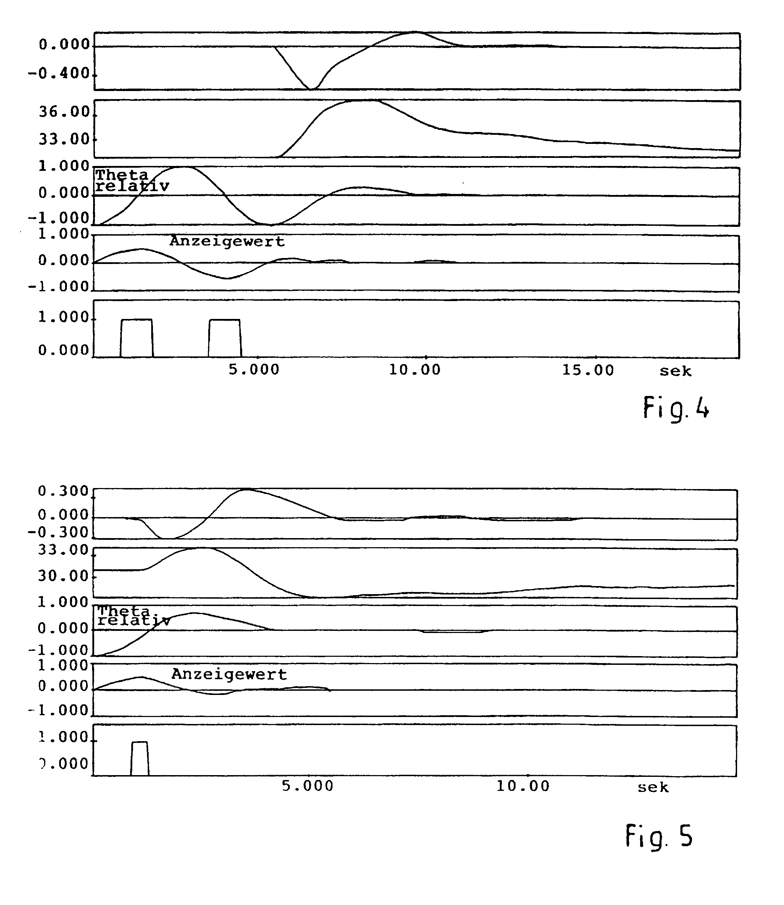

In den Figuren 4 und 5 sind jeweils übereinander die zeitlichen Verläufe des Nickwinkels Theta in Radian, der Fluggeschwindigkeit u in m/sek., des Winkels Thetaᵣₑₗₐₜᵢᵥ in Radian, des auf dem künstlichen Horizont 14 gemäß Figur 3 angezeigten Anzeigewerts, der eine additive Überlagerung von Theta in Radian und einer zeitlichen Ableitung der Summe von Theta und Thetaᵣₑₗₐₜᵢᵥ in Radian/sek. normiert mit einem Faktor Kₜₕₑₜₐ des Werts 1 sek. ist, sowie eines Warnsignals (Warning) dargestellt. Den Darstellungen gemäß den Figuren 4 und 5 liegt dabei jeweils die Längsbewegung eines Hubschraubers in konstanter Höhe mit nichtlinearer Simulation einer Last zugrunde. Die Nicklage des Hubschraubers konnte mit einer PC-Maus gesteuert werden. Beide Zeitverläufe zeigen das manuelle Abfangen des Pendeins einer Last 8 mit 20 kg Masse und einer Länge des Seils 9 von 6,5 m. Hierbei handelt es sich um einen Extremfall mit leichter Last und kurzem Seil, der im Flug zu einer Katastrophe führen kann, wenn die Last in den Rotorkreis gelangt. Anfänglich fliegt die Hubschrauber mit einer Geschwindigkeit von 30 m/sek., und die Last pendelt mit einer Amplitude von 60 °. Gemäß Figur 4 werden zunächst zwei Warntöne von jeweils einer Sekunde Dauer und zwei Sekunden Abstand ausgegeben, wenn der Anzeigewert des Nickwinkels Theta und der zeitlichen Ableitung des Winkels Theta_{absolut} einen Schwellwert überschreitet. Dann greift der Pilot durch Ändern der Nicklage des Hubschraubers ein. Nach vier Sekunden ist das Pendeln abgebaut. Hierzu wurde der Hubschrauber um 30° abgenickt. In der Folge wurde der Hubschrauber um 8 m/sek. schneller.

Gemäß Figur 5 wurde das Abfangen der Pendelbewegung 0,5 Sekunden nach Beginn der ersten Warnung (Warning) begonnen. Bereits etwa 3 sek. später ist das Pendeln abgebaut. Dabei wurde die Nicklage um etwa plus/minus 20° geändert. Hierdurch änderte sich die Geschwindigkeit des Hubschraubers während des Abfangens um plus/minus 3 m/sek.. Wenn zum Abtangen nur kleine Nicklageänderungen zulässig sind, kann das Fendeln nur langsam gedämpft werden. Bei größeren Seil'längen sind nur niedrigere Nickraten zum Stabilisieren des Gesamtsystems aus Hubschrauber und Last erforderlich.

Der gemeinsame Anzeigewert des Nickwinkels Theta und der zeitlichen Ableitung des Winkels Theta_{absolut} kann auch als Eingangssignal für einen Nicklage-Autopiloten verwendet werden. In diesem Fall unterdrückt der Autopilot das Pendeln der Last 8.

Genau wie die Nicklageänderungen der Last werden auch die Rollageänderungen der Last bezüglich des Winkels Phi_{absolut} bei dem neuen Hubschrauber 1 angezeigt und beim Unterdrücken von Pendelbewegungen der Last 8 in Querrichtung ggf. durch den Autopiloten berücksichtigt.

### BEZUGSZEICHENLISTE

- 1 -: Hubschrauber
- 2 -: Hauptstruktur
- 3 -: Rotordrehachse
- 4 -: Hauptrotor
- 5 -: Heckausleger
- 6 -: Heckrotor
- 7 -: Anhängeeinrichtung
- 8 -: Last
- 9 -: Seil
- 10 -: Anzeigeeinrichtungen

- 11 -: Hochachse
- 12 -: Lagekreisel
- 13 -: Erdsenkrechte
- 14 -: künstlicher Horizont
- 15 -: Anzeige
- 16 -: Anzeige
- 17 -: Anzeige
- 18 -: Anzeige
- 19 -: Skala
- 20 -: Skala

- 21 -: Anzeige
- 22 -: Anzeige
- 23 -: Pendelachse

## Patentansprüche

1. Hubschrauber (1) mit einem Lagekreisel (12) zum Erfassen eines Nickwinkels Theta zwischen einer Hochachse (11) des Hubschraubers (1) und der Erdsenkrechten (13) in der Längsmittelebene des Hubschraubers (1), mit Anzeigeeinrichtungen (10) für den Nickwinkel Theta des Hubschraubers (1) und mit einer Anhängeeinrichtung (7) zum Anhängen von Lasten (8) an den Hubschrauber (1), wobei Meßeinrichtungen vorgesehen sind, die in der Längsmittelebene des Hubschraubers (1) einen Winkel Theta_{absolut} zwischen der Erdsenkrechten (13) und der Richtung, unter der die jeweilige Last (8) auf den Hubschrauber (1) einwirkt, oder direkt eine zeitliche Ableitung des Winkels Theta_{absolut} erfassen und wobei Mittel vorgesehen sind, um den Nickwinkel Theta des Hubschraubers (1) additiv mit der zeitlichen Ableitung des Winkels Theta_{absolut}, die durch Multiplikation mit einem Zeitfaktor normiert ist, zu überlagern, **dadurch gekennzeichnet, daß** die Anzeigeeinrichtungen (10) dazu ausgebildet sind, den mit der normierten zeitlichen Ableitung des Winkels Theta_{absolut} additiv überlagerten Nickwinkel Theta des Hubschraubers (1) anzuzeigen.

2. Hubschrauber nach Anspruch 1, **dadurch gekennzeichnet, daß** die Meßeinrichtungen einen Winkelmesser an der Aufhängeeinrichtung (7) umfassen, der in der Längsmittelebene des Hubschraubers (1) einen Winkel Thetaᵣₑₗₐₜᵢᵥ zwischen der Hochachse (11) des Hubschraubers (1) und der Richtung, unter der die jeweilige Last (8) auf den Hubschrauber (1) einwirkt, oder direkt eine zeitliche Ableitung des Winkels Thetaᵣₑₗₐₜᵢᵥ erfaßt.

3. Hubschrauber nach Anspruch 2, **dadurch gekennzeichnet, daß** die Meßeinrichtungen einen Drehratenkreisel umfassen, der in der Längsmittelebene des Hubschraubers (1) eine zeitliche Ableitung des Nickwinkels Theta erfaßt.

4. Hubschrauber (1), insbesondere nach Anspruch 1, 2 oder 3, mit einem Lagekreisel (12) auch zum Erfassen eines Rollwinkels Phi zwischen einer Hochachse (11) des Hubschraubers (1) und der Erdsenkrechten (13) in einer Querebene des Hubschraubers (1), mit Anzeigeeinrichtungen (10) für den Rollwinkel Phi des Hubschraubers (1) und mit einer Anhängeeinrichtung (7) zum Anhängen von Lasten (8) an den Hubschrauber (1), wobei Meßeinrichtungen vorgesehen sind, die in der Querebene des Hubschraubers (1) einen Winkel Phi_{absolut} zwischen der Erdsenkrechten (13) und der Richtung, unter der die jeweilige Last (8) auf den Hubschrauber (1) einwirkt, oder direkt eine zeitliche Ableitung des Winkels Phi_{absolut} erfassen und wobei Mittel vorgesehen sind, um den Rollwinkel Phi des Hubschraubers (1) additiv mit der zeitlichen Ableitung des Winkels Phi_{absolut}, die durch Multiplikation mit einem Zeitfaktor normiert ist, zu überlagern, **dadurch gekennzeichnet, daß** die Anzeigeeinrichtungen (10) dazu ausgebildet sind, den mit der normierten zeitlichen Ableitung des Winkels Phi_{absolut} additiv überlagerten Rollwinkel Phi des Hubschraubers (1) anzuzeigen.

5. Hubschrauber nach Anspruch 3, **dadurch gekennzeichnet, daß** die Meßeinrichtungen einen Winkelmesser an der Aufhängeeinrichtung (7) umfassen, der in einer Querebene des Hubschraubers (1) einen Winkel Phiᵣₑₗₐₜᵢᵥ zwischen der Hochachse (11) des Hubschraubers (1) und der Richtung, unter der die jeweilige Last (8) auf den Hubschrauber (1) einwirkt, oder direkt eine zeitliche Ableitung des Winkels Phiᵣₑₗₐₜᵢᵥ erfaßt.

6. Hubschrauber nach Anspruch 5, **dadurch gekennzeichnet, daß** die Meßeinrichtungen einen Drehratenkreisel umfassen, der in der Querebene des Hubschraubers (1) eine zeitliche Ableitung des Rollwinkels Phi erfaßt.

7. Hubschrauber nach einem der Ansprüche 1 bis 6, **dadurch gekennzeichnet, daß** die Anzeigeeinrichtungen (10) einen künstlichen Horizont (14) aufweisen.

8. Hubschrauber nach einem der Ansprüche 1 bis 7, **dadurch gekennzeichnet, daß** der Zeitfaktor einen konstanten Wert im Bereich von 0,1 bis 10 Sekunden aufweist.

9. Hubschrauber nach einem der Ansprüche 1 bis 8, **dadurch gekennzeichnet, daß** die Anzeigeeinrichtungen (10) dazu vorgesehen sind, ein akustisches und/oder optisches Warnsignal auszugeben, wenn der gemeinsame Anzeigewert von Theta und der zeitlichen Ableitung von Theta_{absolut} und/oder eine zeitliche Ableitung des gemeinsamen Anzeigewerts von Theta und der zeitlichen Ableitung von Theta_{absolut} bzw. der gemeinsame Anzeigewert von Phi und der zeitlichen Ableitung von Phi_{absolut} und/oder eine zeitliche Ableitung des gemeinsamen Anzeigewerts von Phi und der zeitlichen Ableitung von Phi_{absolut} einen oberen oder unteren Schwellwert überschreitet.

10. Hubschrauber nach einem der Ansprüche 1 bis 9, **dadurch gekennzeichnet, daß** ein Autopilot für den Hubschrauber (1) so ausgebildet ist, dass er den Anzeigewert bzw. die Anzeigewerte der Anzeigeeinrichtungen (10) als Eingangssignal verwendet.

## Claims

1. A helicopter (1) having a sight-line gyro (12) for determining a pitch angle Theta between a vertical axis (11) of the helicopter (1) and the earth normal (13) within the longitudinal centre plane of the helicopter (1), display devices (10) for the pitch angle Theta of the helicopter (1), and a hang up device (7) for hanging up loads at the helicopter (1), measuring devices being provided which determine an angle Theta_{absolut} between the earth normal (13) and the direction under which the present load (8) acts upon the helicopter (1) or directly a time derivative of the angle Theta_{absolut} within the longitudinal centre plane of the helicopter (1), and means being provided for additively superimposing the time derivative of the angle Theta_{absolut} standardized by multiplication by a time factor to the pitch angle Theta of the helicopter (1), **characterized in that** the display devices (10) are designed for displaying the pitch angle Theta of the helicopter (1) to which the standardized time derivative of the angle Theta_{absolut} is additively superimposed.

2. The helicopter according to claim 1, **characterized in that** the measuring devices include an angle sensor at the hang up device (7) which determines an angle Thetarₑₗₐₜₜᵢᵥ between the vertical axis (11) of the helicopter (1) and a direction under which the present load (8) acts upon the helicopter (1) or directly a time derivative of the angle Thetaᵣₑₗₐₜᵢᵥ in the longitudinal centre plane of the helicopter (1).

3. The helicopter according to claim 2, **characterized in that** the measuring device includes a rotation frequency sensitive gyro which determines a time derivative of the pitch angle Theta within the longitudinal centre plane of the helicopter (1).

4. A helicopter (1), particularly according to claim 1, 2 or 3, having a sight-line gyro (12) also for determining a roll angle Phi between a vertical axis (11) of the helicopter (1) and the earth normal (13) within a cross plane of the helicopter (1), display devices (10) for the roll angle Phi of the helicopter (1), and a hang up device (7) for hanging up loads (8) at the helicopter (1), measuring devices being provided which determine an angle Phi_{absolut} between the earth normal (13) and the direction under which the present load (8) acts upon the helicopter (1) or directly a time derivative of the angle Phi_{absolut} within the cross plane of the helicopter (1), and means being provided for additively superimposing the time derivative of the angle Phi_{absolut} standardized by multiplication by a time factor to the roll angle Phi of the helicopter (1), **characterized in that** the display devices (10) are designed for displaying the roll angle Phi of the helicopter (1) to which the standardized time derivative of the angle Phi_{absolut} is additively superimposed.

5. The helicopter according to claim 3, **characterized in that** the measuring devices include an angle sensor at the hang up device (7) which determines an angle Phiᵣₐₗₐₜᵢᵥ between the vertical axis (11) of the helicopter (1) and the direction under which the present load (8) acts upon the helicopter (1) or directly a time derivative of the angle Phiᵣₑₗₐₜᵢᵥ in a cross plane of the helicopter (1).

6. The helicopter according to claim 5, **characterized in that** the measuring devices include a rotation frequency sensitive gyro which determines a time derivative of the roll angle Phi in the cross plane of the helicopter (1).

7. The helicopter according to any of the claims 1 to 6, **characterized in that** the display devices (10) comprise an artificial horizon (14).

8. The helicopter according to any of the claims 1 to 7, **characterized in that** the time factor has a constant value in the range from 0,1 to 10 seconds.

9. The helicopter according to any of the claims 1 to 8, **characterized in that** the display devices (10) are provided for outputting an acoustical and/or optical alarm signal, if the common display value of Theta and the time derivative of Theta_{absolut} and/or a time derivative of the common display value of Theta and the time derivative of Theta_{absolut}, or the common display value of Phi and the time derivative of Phi_{absolut} and/or a time derivative of the common display value of Phi and the time derivative of Phi_{absolut} exceeds an upper or lower threshold value.

10. The helicopter according to any of the claims 1 to 9, **characterized in that** an autopilot for the helicopter (1) is designed for using the display value or the display values of the display devices (10) as an input signal.

## Revendications

1. Hélicoptère (1) comportant un gyroscope de position (12) pour détecter un angle de tangage thêta entre un axe vertical (11) de l'hélicoptère (1) et la perpendiculaire à la terre (13) dans le plan médian longitudinal de l'hélicoptère (1), comportant des dispositifs d'axfichage (10) pour l'angle de tangage thêta de l'hélicoptère (1) et comportant un dispositif d'accrochage (7) pour suspendre des charges (8) à l'hélicoptère (1), des dispositifs de mesure étant prévus, qui enregistrent, dans le plan médian longitudinal de l'hélicoptère (1), un angle thêta_{absolu} entre la perpendiculaire à la terre (13) et la direction dans laquelle la charge (8) considérée agit sur l'hélicoptère (1), ou directement une dérivée dans le temps de l'angle thêta_{absolu} et des moyens étant prévus pour superposer l'angle de tangage thêta de l'hélicoptère (1) par addition à la dérivée dans le temps de l'angle thêta_{absolu}, qui est normalisée par multiplication par un facteur de temps, **caractérisé en ce que** les dispositifs d'affichage (10) sont conçus de manière à indiquer l'angle de tangage thêta de l'hélicoptère (1), superposé par addition à la dérivée dans le temps normalisée de l'angle thêta_{absolu}.

2. Hélicoptère selon la revendication 1, **caractérisé en ce que** les dispositifs de mesure comprennent un dispositif de mesure d'angle sur le dispositif d'accrochage (7) qui enregistre, dans le plan médian longitudinal de l'hélicoptère (1), un angle thêta_{relatif} entre l'axe vertical (11) de l'hélicoptère (1) et la direction dans laquelle la charge (8) respective agit sur l'hélicoptère (1), ou directement une dérivée dans le temps de l'angle thêta_{relatif}.

3. Hélicoptère selon la revendication 2, **caractérisé en ce que** les dispositifs de mesure comprennent un gyroscope de taux de rotation qui enregistre, dans le plan médian longitudinal de l'hélicoptère (1), une dérivée dans le temps de l'angle de tangage thêta.

4. Hélicoptère (1), en particulier selon la revendication 1, 2 ou 3, comportant un gyroscope de position (12) pour enregistrer aussi un angle de roulis phi entre un axe vertical (11) de l'hélicoptère (1) et la perpendiculaire à la terra (13) dans un plan transversal de l'hélicoptère (1), comportant des dispositifs d'affichage (10) pour l'angle de roulis phi de l'hélicoptère (1) et comportant un dispositif d'accrochage (7) pour suspendre des charges (8) à l'hélicoptère (1), des dispositifs de mesure étant prévus qui enregistrent, dans le plan transversal de l'hélicoptère (1), un angle phi_{absolu} entre la perpendiculaire à la terre (13) et la direction dans laquelle la charge (8) considérée agit sur l'hélicoptère (1), ou directement une dérivée dans le temps de l'angle phi_{absolu}, et des moyens étant prévus pour superposer l'angle de roulis phi de l'hélicoptère (1) par addition à la dérivée dans le temps de l'angle phi_{absolu}, qui est normalisée par multiplication par un facteur de temps, **caractérisé en ce que** les dispositifs d'affichage (10) sont conçus pour indiquer l'angle de roulis phi de l'hélicoptère (1), superposé par addition à la dérivée dans le temps normalisée de l'angle phi_{absolu}.

5. Hélicoptère selon la revendication 3, **caractérisé en ce que** les dispositifs de mesure comprennent un dispositif de mesure d'angle sur le dispositif d'accrochage (7) qui enregistre, dans un plan transversal de l'hélicoptère (1), un angle phi_{relatif} entre l'axe vertical (11) de l'hélicoptère (1) et la direction dans laquelle la charge (8) considérée agit sur l'hélicoptère (1), ou directement une dérivée dans le temps de l'angle phi_{relatif}.

6. Hélicoptère selon la revendication 5, **caractérisé en ce que** les dispositifs de mesure comprennent un gyroscope de taux de rotation qui enregistre, dans le plan transversal de l'hélicopters (1), une dérivée dans le temps de l'angle de roulis phi.

7. Hélicoptère selon l'une des revendications 1 à 6, **caractérisé en ce que** les dispositifs d'affichage (10) comportent un horizon (14) artificiel.

8. Hélicoptère selon l'une des revendications 1 à 7, **caractérisé en ce que** le facteur de temps présente une valeur constante comprise entre 0,1 et 10 secondes.

9. Hélicoptère selon l'une des revendications 1 à 8, **caractérisé en ce que** les dispositifs d'affichage (10) sont prévus pour délivrer un signal d'avertissement acoustique et/ou optique lorsque la valeur affichée commune de thêta et de la dérivée dans le temps de thêta_{absolu} et/ou de la dérivée dans le temps de la valeur affichée commune de thêta et de la dérivée dans le temps de thêta_{absolu} ou la valeur affichée commune de phi et de la dérivée dans le temps de phi_{absolu} et/ou une dérivée dans le temps de la valeur affichée commune de phi et de la dérivée dans le temps de phi_{absolu}, dépassent une valeur seuil supérieure ou inférieure.

10. Hélicoptère selon l'une des revendications 1 à 9, **caractérisé en ce qu'**un auto-pilote pour l'hélicoptère (1) est conçu de manière à utiliser la valeur affichée, ou les valeurs affichées des dispositifs d'affichage (10) comme signal d'entrée.
